# EUROPEAN PATENT SPECIFICATION

(11) **EP 3 312 076 B1**
(45) Date of publication and mention of the grant of the patent: **27.02.2019**
(21) Application number: 17193541.4
(22) Date of filing: 27.09.2017
(51) Int. Cl.: B62D 25/14, B62D 1/16

(54) **STEERING SUPPORT STRUCTURE AND STEERING SUPPORT METHOD**
LENKUNGSUNTERSTÜTZUNGSSTRUKTUR UND LENKUNGSUNTERSTÜTZUNGSVERFAHREN
STRUCTURE DE SUPPORT DE DIRECTION ET PROCÉDÉ DE SUPPORT DE DIRECTION

(30) Priority: 12.10.2016 JP 2016201008
(43) Date of publication of application: 25.04.2018
(73) Proprietor: TOYOTA JIDOSHA KABUSHIKI KAISHA, Toyota-shi, Aichi-ken 471-8571 (JP)
(72) Inventor: KURITA, Kazuaki, Aichi-ken 471-8571 (JP)
(74) Representative: J A Kemp

(56) References cited:
- KR-A- 20020 078 283
- KR-A- 20020 080 715
- US-A1- 2005 275 207

## Description

### 1. Technical Field of the Invention

The present invention relates to a steering support structure and a steering support method.

### 2. Description of Related Art

Japanese Patent Application Publication No. 2000-264225 (JP 2000-264225 A) describes a steering column support structure in which a column bracket that supports a steering column is attached to an instrument panel reinforcement (a deck cross member). In this structure, a plurality of members is joined by welding to form the column bracket and the column bracket is joined to the instrument panel reinforcement by welding. Further, a nut is disposed in the column bracket, so that the steering column is fastened and fixed to the column bracket with a bolt threadedly attached to the nut. Note that International Publication No. 2004/011318 describes a configuration including position adjustment means for adjusting a position of a steering column relative to a vehicle-body side bracket.
KR 2002 0080715 A discloses the preamble of claim 1.

### SUMMARY OF THE INVENTION

The steering column support structure described in JP 2000-264225 A does not describe a material, a manufacturing method, and the like to form a column bracket. For example, in a case where the column bracket is made of a material having a low ductility, such as a die-casting of aluminum, an allowable range of assembling distortion may become small.

The present invention provides a steering support structure and a steering support method each of which is able to reduce assembling distortion at the time when an upper bracket is fastened to a lower bracket with a fastener.

A first aspect of the present invention provides a steering support structure. A steering support structure according to the first aspect of the present invention includes an instrument panel reinforcement extending in a vehicle width direction; a steering support bracket attached to the instrument panel reinforcement and supports a steering column, the steering support bracket including an upper bracket placed on an upper side of the instrument panel reinforcement in a vehicle up-down direction, and a lower bracket placed on a lower side of the instrument panel reinforcement in the vehicle up-down direction, at least one of the upper bracket and the lower bracket being joined to the instrument panel reinforcement; a front fastening portion fastening the upper bracket and the lower bracket to each other on a front side of the instrument panel reinforcement in a vehicle front-rear direction; a rear fastening portion fastening the upper bracket and the lower bracket to each other on a rear side of the instrument panel reinforcement in the vehicle front-rear direction; and a nut provided between the upper bracket and the lower bracket in at least one of the front fastening portion and the rear fastening portion, the nut being configured to adjust a height of a fastening position of the upper bracket relative to the lower bracket.

In the first aspect, since the height of the fastening position of the upper bracket relative to the lower bracket is adjusted by the nut, it is possible to adjust a gap between the upper bracket and the lower bracket in at least one of the front fastening portion and the rear fastening portion. Hereby, a variation of a gap between the upper bracket and the lower bracket, caused due to a component variation, can be made generally constant, thereby making it possible to reduce assembling distortion at the time when the upper bracket and the lower bracket are fastened to each other with a fastener.

In the first aspect, the nut may be provided at both of the front fastening portion and the rear fastening portion.

With the above configuration, it is possible to bury gaps between the upper bracket and the lower bracket by the nuts in both the front fastening portion and the rear fastening portion. Hereby, it is possible to eliminate the gaps between the upper bracket and the lower bracket by both the front fastening portion and the rear fastening portion, thereby making it possible to largely reduce the assembling distortion.

In the first aspect, in a state where a bolt is inserted into either one of the upper bracket and the lower bracket and penetrates through the either one of the upper bracket and the lower bracket without being fastened and fixed to the nut, the bolt may be fastened to the other one of the upper bracket and the lower bracket. The nut may include an external screw thread portion provided on an outer periphery of the nut, the external screw thread portion may be provided as a reverse screw relative to the bolt. The other one of the upper bracket and the lower bracket may include an internal screw thread portion provided as a reverse screw such that the external screw thread portion is threadedly engaged to the internal screw thread portion. The nut may be configured to adjust a gap between the upper bracket and the lower bracket by moving toward the either one of the upper bracket and the lower bracket along with the bolt being screwed into the other one of the upper bracket and the lower bracket.

With the above configuration, since the external screw thread portion of the nut is threadedly engaged to the internal screw thread portion of the other one of the upper bracket and the lower bracket, the nut moves toward the either one of the upper bracket and the lower bracket along with the bolt being screwed into the other one of the upper bracket and the lower bracket. On this account, the nut can adjust the gap between the upper bracket and the lower bracket along with the bolt being screwed into the other one of the upper bracket and the lower bracket.

A second aspect of the present invention provides a steering support method. The steering support method of the second aspect is a steering support method for supporting a steering column, via a steering support bracket, by an instrument panel reinforcement extending in a vehicle width direction, and the steering support method includes: placing a nut between an upper bracket and a lower bracket on either one of a front side and a rear side of the instrument panel reinforcement in a vehicle front-rear direction, the upper bracket being constituting a part of the steering support bracket and placed on an upper side of the instrument panel reinforcement in a vehicle up-down direction, the lower bracket being constituting a part of the steering support bracket and placed on a lower side of the instrument panel reinforcement in the vehicle up-down direction, the nut being configured to adjust a height of a fastening position of the upper bracket relative to the lower bracket; adjusting a first gap between the upper bracket and the lower bracket by adjusting a height of the nut on the either one of the front side and the rear side of the instrument panel reinforcement in the vehicle front-rear direction, and fastening the upper bracket and the lower bracket with a first fastener via the nut; and fastening the upper bracket and the lower bracket with a second fastener without the nut on the other one of the front side and the rear side of the instrument panel reinforcement.

In the second aspect, the first gap between the upper bracket and the lower bracket is adjusted by the nut on either one of the front side and the rear side of the instrument panel reinforcement, the upper bracket and the lower bracket are fastened to each other with the first fastener via the nut, and the upper bracket and the lower bracket are fastened to each other with the second fastener on the other one of the front side and the rear side of the instrument panel reinforcement. This makes it possible to reduce the assembling distortion at the time when the upper bracket and the lower bracket are fastened to each other with the first fastener and the second fastener.

In the second aspect, the steering support method may include, before fastening the upper bracket and the lower bracket, fixing a second gap between the upper bracket and the lower bracket with a jig on the other one of the front side and the rear side of the instrument panel reinforcement in the vehicle front-rear direction.

In the above method, before the fastening with the first fastener, the second gap between the upper bracket and the lower bracket is fixed with the jig on the other one of the front side and the rear side of the instrument panel reinforcement. Hereby, the upper bracket and the lower bracket are fastened to each other with the first fastener and the second fastener in a state where the second gap between the upper bracket and the lower bracket is fixed generally constant by the jig. Hereby, the assembling distortion at the time when the upper bracket and the lower bracket are fastened to each other with the first fastener and the second fastener can fall within an allowable range, thereby making it possible to improve reliability.

A third aspect of the invention provides a steering support method for supporting a steering column, via a steering support bracket, by an instrument panel reinforcement extending in a vehicle width direction, and the steering support method includes: placing two nut, the two nuts being placed between an upper bracket and a lower bracket on a front side and a rear side of the instrument panel reinforcement in a vehicle front-rear direction, respectively, the upper bracket being constituting a part of the steering support bracket and placed on an upper side of the instrument panel reinforcement in a vehicle up-down direction, the lower bracket being constituting a part of the steering support bracket and placed on a lower side of the instrument panel reinforcement in the vehicle up-down direction, the nuts being configured to adjust a height of a fastening position of the upper bracket relative to the lower bracket; adjusting a gap between the upper bracket and the lower bracket by adjusting a height of either one of the nuts placed on either one of the front side and the rear side of the instrument panel reinforcement in the vehicle front-rear direction, and fastening the upper bracket and the lower bracket with a first fastener via the nut; and fastening the upper bracket and the lower bracket with a second fastener via the other one of the nuts on the other one of the front side and the rear side of the instrument panel reinforcement.

According to the steering support method according to the third aspect, the upper bracket and the lower bracket can be fastened in a state where the gaps between the upper bracket and the lower bracket on the front side and the rear side of the instrument panel reinforcement are buried by the nuts, thereby making it possible to largely reduce the assembling distortion at the time when the upper bracket and the lower bracket are fastened to each other with the first fastener and the second fastener.

According to the steering support structure and the steering support method of the present invention, it is possible to reduce the assembling distortion at the time when the upper bracket and the lower bracket are fastened to each other with the fasteners.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view illustrating a state where a steering support structure of a first embodiment is seen from a vehicle diagonally rearward direction;
FIG. 2 is a sectional view illustrating the steering support structure illustrated in FIG. 1;
FIG. 3 is a sectional view illustrating the steering support structure along a line III-III in FIG. 2;
FIG. 4 is a sectional view illustrating the steering support structure along a line IV-IV in FIG. 2; and
FIG. 5 is a sectional view illustrating a first step of a steering support method for assembling the steering support structure of the first embodiment;
FIG. 6 is a sectional view illustrating a second step of the steering support method for assembling the steering support structure of the first embodiment;
FIG. 7 is a sectional view illustrating a third step of the steering support method for assembling the steering support structure of the first embodiment; and
FIG. 8 is a sectional view illustrating a steering support structure of a second embodiment.

### DETAILED DESCRIPTION OF EMBODIMENTS

The following describes an embodiment of the present invention in detail with reference to the drawings. Note that an arrow FR, an arrow UP, and an arrow LH described appropriately in each drawing indicate a front direction, an upper direction, and a left direction at the time of facing the front direction, in a vehicle to which a steering support structure of the embodiments of the present invention is applied. Hereinafter, in a case where a description is made by use of directions of front and rear, up and down, and right and left without any special mention, they indicate front and rear of a front-rear direction in the vehicle, up and down of an up-down direction, and right and left of a right-left direction (a vehicle width direction) at the time of facing the front direction.

### [First Embodiment]

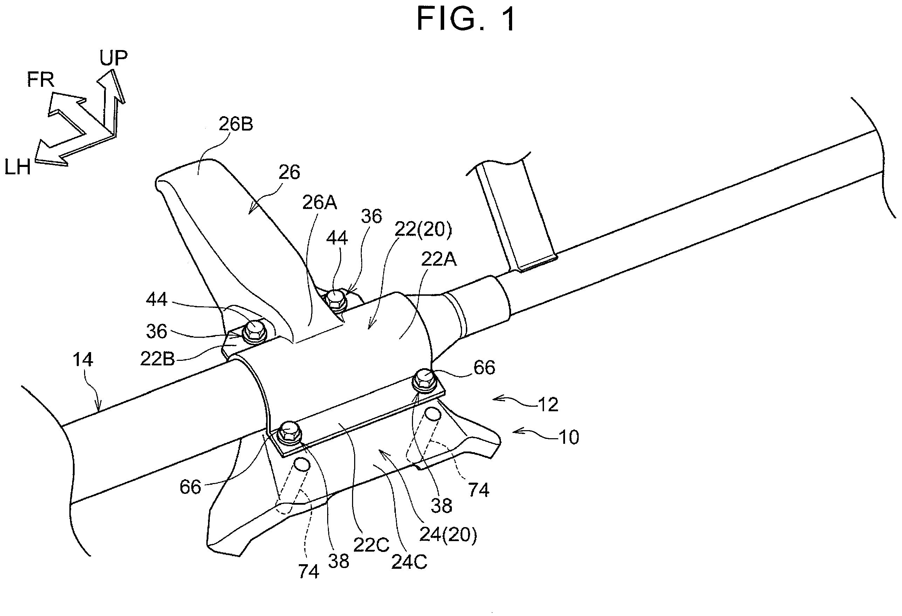

With the use of FIGS. 1 to 7, the following describes a steering support structure of the first embodiment.

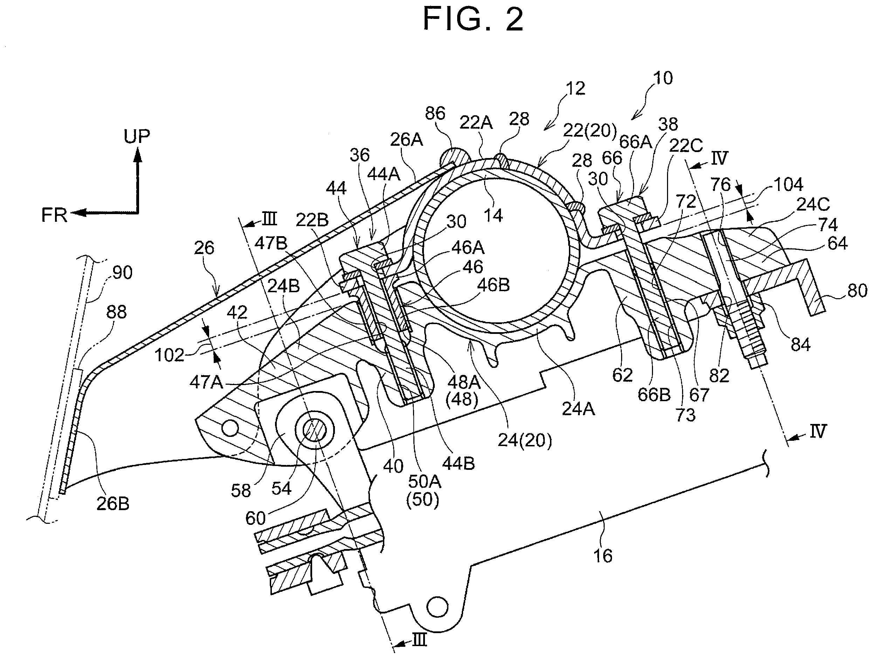

FIG. 1 is a perspective view illustrating a vehicle 10 to which a steering support structure 12 of the first embodiment is applied. Further, FIG. 2 is a sectional view illustrating the steering support structure 12 illustrated in FIG. 1. As illustrated in FIGS. 1 and 2, the vehicle 10 is provided with an instrument panel reinforcement (hereinafter referred to as the "instrument panel reinforcement") 14 extending in the vehicle width direction. A steering support bracket 20 that supports a steering column 16 (see FIG. 2) is attached to the instrument panel reinforcement 14. The steering support bracket 20 is constituted by an upper bracket 22 placed on a top side of the instrument panel reinforcement 14, and a lower bracket 24 placed on a bottom side of the instrument panel reinforcement 14.

That is, the steering support structure 12 includes the instrument panel reinforcement 14 and the steering support bracket 20, and the steering support bracket 20 is constituted by the upper bracket 22 and the lower bracket 24. In the present embodiment, the steering support bracket 20 is constituted by two components, i.e., the upper bracket 22 and the lower bracket 24.

A dash-to-brace 26 extending toward a vehicle front side from a position where the upper bracket 22 is attached to the instrument panel reinforcement 14 is provided on a top side of the upper bracket 22.

The instrument panel reinforcement 14 is configured such that cylindrical pipes having different outside diameters are connected to each other in an axial direction (see FIG. 1). In the present embodiment, a left side, in a width direction, of the instrument panel reinforcement 14 is a driver side, and an outside diameter of a part of the instrument panel reinforcement 14 on the left side in the width direction is larger than an outside diameter of a part of the instrument panel reinforcement 14 on a right side in the width direction (see FIG. 1). Although not illustrated herein, both ends of the instrument panel reinforcement 14 are joined to right and left front pillars and several intermediate parts thereof are fixed to a vehicle body by braces and the like. The instrument panel reinforcement 14 is made of light alloy such as aluminum alloy, for example.

The upper bracket 22 and the lower bracket 24 are attached to the driver side of the instrument panel reinforcement 14 in the width direction. The steering column 16 is supported by the lower bracket 24 (see FIG. 2). Note that the steering column 16 is not illustrated in FIG. 1.

As illustrated in FIG. 2, the steering column 16 is placed in a diagonal direction so that a front end in a vehicle front-rear direction is placed on a lower side and a rear end in the vehicle front-rear direction is placed on an upper side. Although not illustrated herein, the steering column 16 is configured such that a steering main shaft is supported rotatably by a column tube via a bearing, and a steering wheel is fixed to the rear end of the steering main shaft with a locknut. A structure in which the steering column 16 is supported by the lower bracket 24 will be described later.

As illustrated in FIG. 2, the upper bracket 22 is placed so as to cover an upper side of the instrument panel reinforcement 14 (see FIG. 1). The upper bracket 22 includes: a curved portion 22A curved along a top face of an outer peripheral surface of the instrument panel reinforcement 14; a front attachment portion 22B extending forward from a front end of the curved portion 22A; and a rear attachment portion 22C extending rearward from a rear end of the curved portion 22A. The curved portion 22A is formed generally in a semicircular shape in a section along the vehicle front-rear direction, and has a shape fitted to the top face of the outer peripheral surface of the instrument panel reinforcement 14. The curved portion 22A is placed so as to make contact with, that is, make close contact with the top face of the outer peripheral surface of the instrument panel reinforcement 14 from the upper side. The curved portion 22A of the upper bracket 22 is joined to the top side of the instrument panel reinforcement 14 by a plurality of welded portions 28. For example, the welded portions 28 are formed by performing arc-welding.

The front attachment portion 22B and the rear attachment portion 22C are plate-shaped portions extending generally radially outward from the curved portion 22A. The rear attachment portion 22C is placed so that a rear end side in the vehicle front-rear direction is inclined upward relative to a front end side toward a vehicle rear side. The front attachment portion 22B is placed so that a front end side in the vehicle front-rear direction is inclined downward relative to a rear end side toward a vehicle front side. Bolt through-holes 30 through which the after-mentioned bolts 44 as a first fastener penetrate are formed in the front attachment portion 22B. Bolt through-holes 30 through which the after-mentioned bolts 66 as a second fastener penetrate are formed in the rear attachment portion 22C. Although not illustrated herein, the bolt through-holes 30 through which the bolts 44 penetrate are formed at two positions on both sides, in the vehicle width direction, in the front attachment portion 22B (see FIG. 1). The bolt through-holes 30 through which the bolts 66 penetrate are formed at two positions on both side, in the vehicle width direction, in the rear attachment portion 22C (see FIG. 1).

The upper bracket 22 is constituted by a press material formed by press molding or an extruded material formed by extrusion molding, for example. Further, the upper bracket 22 is constituted by metal (aluminum, magnesium, iron, and the like), resin, or a composite of metal and resin. In the present embodiment, the upper bracket 22 is formed by extrusion molding of aluminum.

As illustrated in FIG. 2, the lower bracket 24 is placed so as to cover a lower side of the instrument panel reinforcement 14 and extends in a direction (the front-rear direction of the instrument panel reinforcement 14) intersecting with an axial direction of the instrument panel reinforcement 14. More specifically, the lower bracket 24 includes: a curve-shaped portion 24A formed in a curved shape along a bottom face of the outer peripheral surface of the instrument panel reinforcement 14; a front extension portion 24B extending forward from a front end of the curve-shaped portion 24A; and a rear extension portion 24C extending rearward from a rear end of the curve-shaped portion 24A.

The curve-shaped portion 24A is formed generally in a semicircular shape in a section along the vehicle front-rear direction, and has a shape fitted to the bottom face of the outer peripheral surface of the instrument panel reinforcement 14. Note that a plurality of libs extending toward a vehicle lower side is provided on an outer periphery of the curve-shaped portion 24A. The curve-shaped portion 24A is placed so as to make contact with, that is, make close contact with the bottom face of the outer peripheral surface of the instrument panel reinforcement 14 from the lower side. In the present embodiment, the curve-shaped portion 24A is not welded to the bottom side of the instrument panel reinforcement 14.

The front extension portion 24B includes an attachment portion 40 placed at a position overlapping with the front attachment portion 22B of the upper bracket 22, and a column attachment portion 42 placed on the front side relative to the attachment portion 40. The attachment portion 40 extends forward from a front end of the curve-shaped portion 24A, and has a shape projecting downward in the up-down direction. As illustrated in FIG. 1, the front attachment portion 22B of the upper bracket 22 and the attachment portion 40 of the lower bracket 24 are fastened and fixed to each other with front fastening portions 36 including the bolts 44 and the like at two positions in the vehicle width direction.

As illustrated in FIG. 2, the attachment portion 40 has an upper insertion hole 48 to which a nut 46 for adjusting a gap with respect to the front attachment portion 22B is attached, and a hole portion 50 communicating with the insertion hole 48 on a lower side of the insertion hole 48. The nut 46 can adjust a height, in the up-down direction (the axial direction), of the attachment portion 40 with respect to the top face. An inside diameter of the insertion hole 48 is larger than an inside diameter of the hole portion 50. A stepped portion increased in an inside diameter toward the upper side is provided between the insertion hole 48 and the hole portion 50. The bolt 44 as the first fastener includes a head 44A and a shaft portion 44B where an external screw thread portion is formed. An outside diameter of the head 44A is larger than an outside diameter of the shaft portion 44B. An internal screw thread portion 50A as the first fastener to which a tip end of the shaft portion 44B of the bolt 44 is fastened is provided on an inner periphery of the hole portion 50.

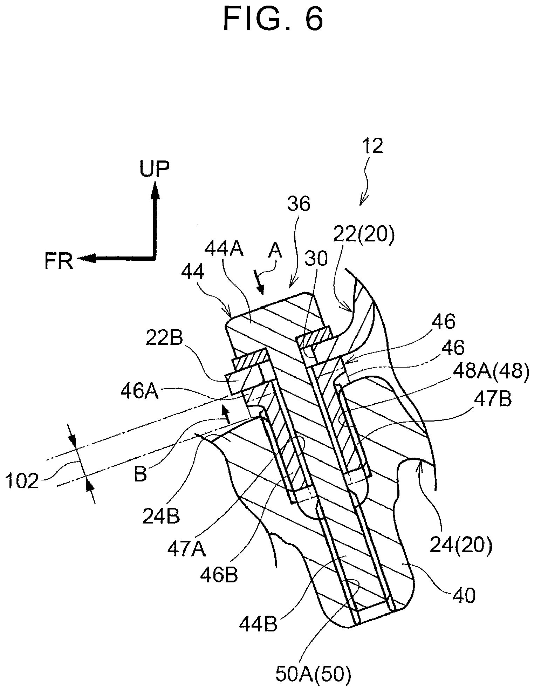

As illustrated in FIGS. 2 and 6, the nut 46 includes a large-diameter portion 46A provided in one end, and a small-diameter portion 46B having an outside diameter smaller than the large-diameter portion 46A. The nut 46 has a through-hole formed continuously through the large-diameter portion 46A and the small-diameter portion 46B. An internal screw thread portion 47A is formed on an inner periphery of the nut 46 so as to have a shape to which the shaft portion 44B of the bolt 44 is not fastened and fixed. The internal screw thread portion 47A of the nut 46 is configured such that the external screw thread portion of the shaft portion 44B of the bolt 44 is threadedly engaged thereto to such an extent that a resistance occurs. An external screw thread portion 47B is formed on an outer periphery of the small-diameter portion 46B of the nut 46 as a reverse screw relative to the shaft portion 44B of the bolt 44. The insertion hole 48 of the attachment portion 40 has an internal screw thread portion 48A formed as a reverse screw such that the external screw thread portion 47B is fastened thereto.

In a state where the shaft portion 44B of the bolt 44 is inserted into the bolt through-hole 30 from the upper side of the front attachment portion 22B of the upper bracket 22 and the shaft portion 44B of the bolt 44 penetrates therethrough without being fastened and fixed to the nut 46, the external screw thread portion of the shaft portion 44B of the bolt 44 is fastened to the internal screw thread portion 50A of the hole portion 50. Hereby, the front attachment portion 22B of the upper bracket 22 and the front extension portion 24B of the lower bracket 24 are fastened and fixed to each other with the front fastening portions 36 including the bolts 44 and the like.

At this time, the external screw thread portion 47B as the reverse screw relative to the shaft portion 44B of the bolt 44 is formed on the outer periphery of the small-diameter portion 46B of the nut 46 as described above, and the external screw thread portion 47B of the nut 46 is engaged threadedly to the internal screw thread portion 48A of the insertion hole 48. On this account, as illustrated in FIG. 6, when the bolt 44 rotates clockwise and the bolt 44 moves downward (an arrow-A direction), for example, the nut 46 rotates and moves upward (toward the front attachment portion 22B of the upper bracket 22 as indicated by an arrow B) along with the movement of the bolt 44. When a top face of the large-diameter portion 46A of the nut 46 makes contact with a bottom face of the front attachment portion 22B of the upper bracket 22, the nut 46 buries a first gap 102 between the bottom face of the front attachment portion 22B of the upper bracket 22 and the top face of the attachment portion 40 of the lower bracket 24. Further, when the bolt 44 is rotated clockwise, the head 44A of the bolt 44 makes contact with the front attachment portion 22B of the upper bracket 22 via a washer and the external screw thread portion of the shaft portion 44B of the bolt 44 is fastened to the internal screw thread portion 50A of the hole portion 50.

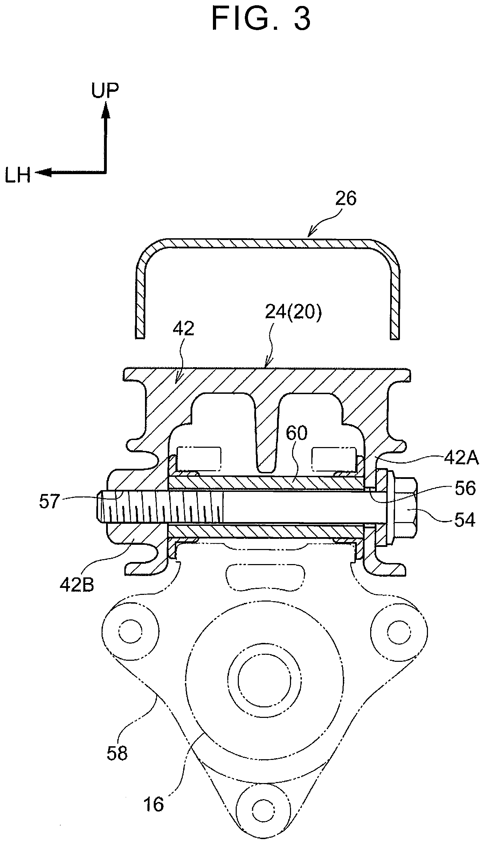

As illustrated in FIG. 3, the column attachment portion 42 is formed generally in a U-shape in a section cut along the vehicle up and down direction and is placed so as to be opened on a vehicle lower side. The column attachment portion 42 includes a pair of attachment pieces 42A, 42B provided on both sides in the vehicle width direction so as to extend towards the vehicle lower side. A bolt through-hole 56 into which a bolt 54 is inserted is formed in one attachment piece 42A. The internal screw thread portion 57 to which the bolt 54 is threadedly engaged (that is, fastened) is formed in the other attachment piece 42B. A column bracket 58 is attached to a front side of the steering column 16 in the front-rear direction. The column bracket 58 is provided with a collar 60 into which the bolt 54 is inserted (see FIG. 2). A shaft portion of the bolt 54 is inserted into the bolt through-hole 56 from a side closer to the attachment piece 42A and the shaft portion of the bolt 54 is also inserted into the collar 60, so that the shaft portion of the bolt 54 is fastened to the internal screw thread portion 57 of the attachment piece 42B. At this time, a head of the bolt 54 makes contact with the attachment piece 42A via a washer. Hereby, the column bracket 58 is fastened and fixed to the column attachment portion 42 of the lower bracket 24.

As illustrated in FIG. 2, the rear extension portion 24C includes an attachment portion 62 placed at a position overlapping with the rear attachment portion 22C of the upper bracket 22, and a column attachment portion 64 placed on the rear side relative to the attachment portion 62. The attachment portion 62 extends rearward from a rear end of the curve-shaped portion 24A, and has a shape projecting downward in the up-down direction. As illustrated in FIG. 1, the rear attachment portion 22C of the upper bracket 22 and the rear extension portion 24C of the lower bracket 24 are fastened and fixed to each other with rear fastening portions 38 including the bolts 66 and the like at two positions in the vehicle width direction.

As illustrated in FIG. 2, the bolt 66 includes a head 66A and a shaft portion 66B having an external screw thread portion 67. The external screw thread portion 67 is formed on a tip end side from an intermediate part of the shaft portion 66B in the axial direction. The attachment portion 62 has a hole portion 72 into which the shaft portion 66B of the bolt 66 is inserted. An internal screw thread portion 73 to which the external screw thread portion 67 of the bolt 66 is threadedly engaged (that is, fastened) is formed in the hole portion 72. The shaft portion 66B of the bolt 66 is inserted into the bolt through-hole 30 from an upper side of the rear attachment portion 22C of the upper bracket 22, and the external screw thread portion 67 of the bolt 66 is fastened to the internal screw thread portion 73 of the hole portion 72. Hereby, the rear attachment portion 22C of the upper bracket 22 and the rear extension portion 24C of the lower bracket 24 are fastened and fixed to each other with the rear fastening portions 38 including the bolts 66 and the like. Note that FIG. 2 illustrates a state before the external screw thread portion 67 of the bolt 66 is fastened to the internal screw thread portion 73 of the hole portion 72. That is, in FIG. 2, the head 66A of the bolt 66 makes contact with the rear attachment portion 22C of the upper bracket 22 via a washer and a second gap 104 is formed between a bottom face of the rear attachment portion 22C of the upper bracket 22 and a top face of the rear extension portion 24C of the lower bracket 24.

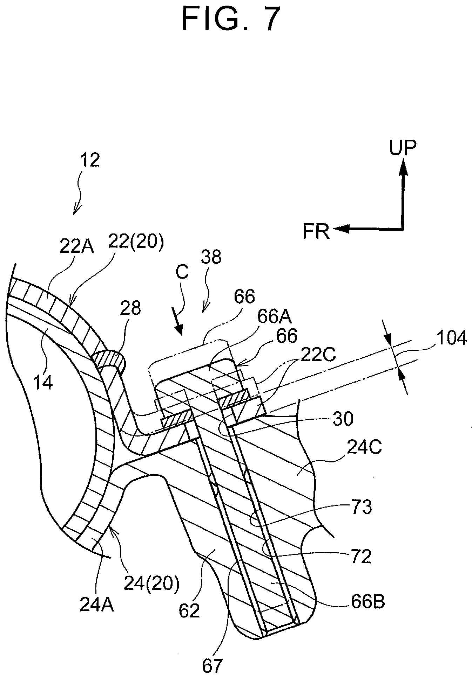

As illustrated in FIG. 7, in the steering support structure 12, in a state where the external screw thread portion 67 of the bolt 66 has been fastened to the internal screw thread portion 73 of the hole portion 72, the bottom face of the rear attachment portion 22C of the upper bracket 22 makes close contact with the rear extension portion 24C of the lower bracket 24 due to deformation. In this state, the curve-shaped portion 24A of the lower bracket 24 makes close contact with the bottom face of the outer peripheral surface of the instrument panel reinforcement 14. That is, in a state where the instrument panel reinforcement 14 is sandwiched between the upper bracket 22 and the lower bracket 24, the lower bracket 24 and the upper bracket 22 are fastened and fixed to each other with the front fastening portions 36 and the rear fastening portions 38 on the front side and the rear side in the front-rear direction (see FIG. 1).

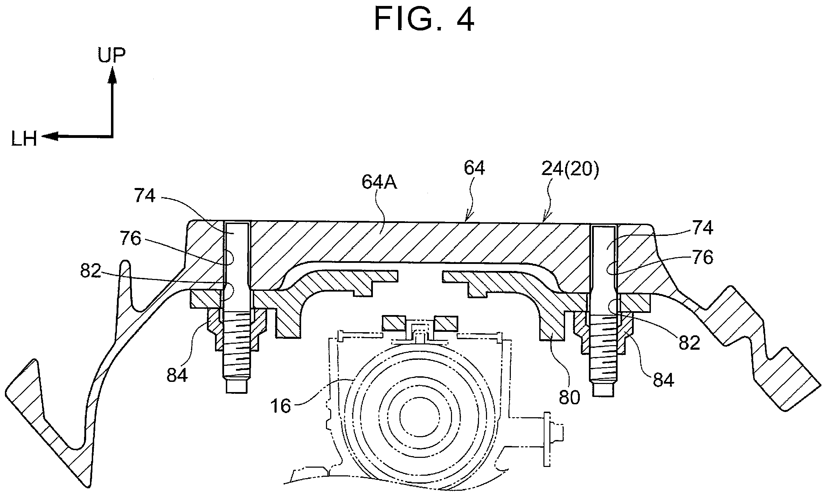

As illustrated in FIG. 4, the column attachment portion 64 is formed generally in a C-shape in a section cut generally along the vehicle up and down direction and is placed so as to be opened on the vehicle lower side. The column attachment portion 64 includes an upper wall portion 64A placed along the vehicle width direction. Attachment holes 76 to which stud bolts 74 are attached are formed on both sides of the upper wall portion 64A in the vehicle width direction. A column bracket 80 is attached to a rear side of the steering column 16 in the front-rear direction (see FIG. 2). A structure in which the steering column 16 is attached to the column bracket 80 is not illustrated herein. Through-holes 82 are formed on both sides of the column bracket 80 in the width direction at positions corresponding to the attachment holes 76, and weld nuts 84 are attached to the through-holes 82 (see FIG. 2). A tip end of the stud bolt 74 is fastened to the weld nut 84. Hereby, the column bracket 80 is fastened and fixed to the column attachment portion 64 of the lower bracket 24.

The lower bracket 24 is constituted by an injection molded product, for example. The lower bracket 24 is constituted by metal (aluminum, magnesium, iron, and the like), resin, or a composite of metal and resin, for example. In the present embodiment, the lower bracket 24 is a die-casting product of aluminum. Here, the die-casting is one of metal mold casting methods and is a casting method for producing a lot of castings with a high dimension accuracy in a short time by press-fitting molten metal into a die.

As described above, in the steering support structure 12, the lower bracket 24 is a die-casting product, and the upper bracket 22 is constituted by a press material or an extruded material. In the present embodiment, the upper bracket 22 is constituted by a press material. Hereby, the ductility of the upper bracket 22 is higher than the ductility of the lower bracket 24.

Further, the lower bracket 24 is a die-casting product that can be hardly welded to other members. Hereby, the lower bracket 24 and the upper bracket 22 are fastened and fixed to each other with the front fastening portion 36 including the bolts 44 and the like on the front side in the vehicle front-rear direction, and are fastened and fixed to each other with the rear fastening portion 38 including the bolts 66 and the like on the rear side in the vehicle front-rear direction.

As illustrated in FIG. 2, the dash-to-brace 26 is joined to a top face of the curved portion 22A of the upper bracket 22 with a welded portion 86. The welded portion 86 is formed by performing arc-welding, for example. More specifically, the dash-to-brace 26 extends along the vehicle front-rear direction, and a rear end 26A of the dash-to-brace 26 is joined to the top face of the curved portion 22A with the welded portion 86. A front end 26B side of the dash-to-brace 26 extends diagonally downward toward the vehicle front side from the rear end 26A. The front end 26B of the dash-to-brace 26 is fixed to a body 90 (e.g., a dash panel) via a bracket 88. Although not illustrated herein, the front end 26B of the dash-to-brace 26 is fixed to the body 90 (e.g., the dash panel) via the bracket 88 with a fastener.

Next will be described a steering support method for assembling the steering support structure 12 of the first embodiment and the operation/working-effect of the steering support structure 12 of the first embodiment.

First described is the steering support method. The upper bracket 22 is placed on the top side of the instrument panel reinforcement 14 and the upper bracket 22 is joined to the top face of the instrument panel reinforcement 14 by welding. In the present embodiment, arc-welding is performed, so that the upper bracket 22 is joined to the top face of the instrument panel reinforcement 14 by a plurality of welded portions 28.

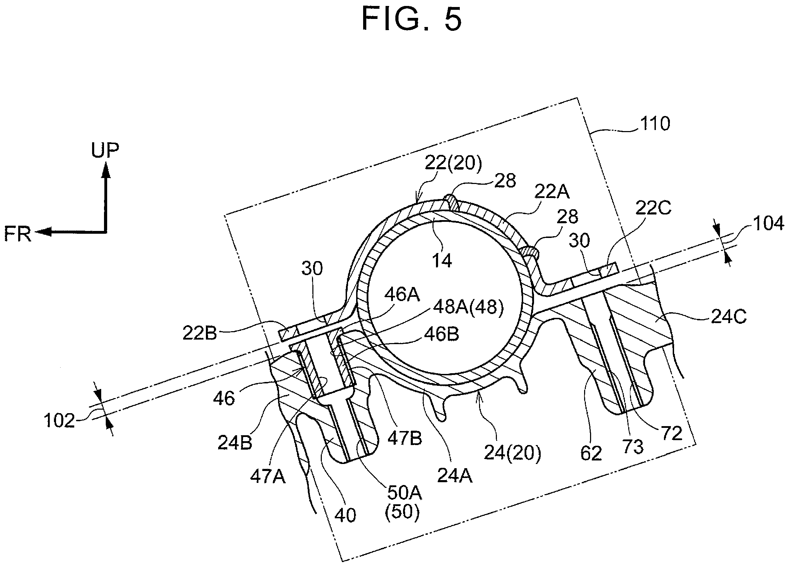

Further, the lower bracket 24 is placed on the bottom side of the instrument panel reinforcement 14. At this time, the nut 46 is attached to the insertion hole 48 of the lower bracket 24 in advance (see FIG. 5). That is, the external screw thread portion 47B of the nut 46 is threadedly engaged to the internal screw thread portion 48A of the insertion hole 48 of the lower bracket 24. For example, the nut 46 is placed at a position where the large-diameter portion 46A makes contact with the top face of the front extension portion 24B. Hereby, the nut 46 is placed between the upper bracket 22 placed on the top side of the instrument panel reinforcement 14 and the lower bracket 24 placed on the bottom side of the instrument panel reinforcement 14, on the front side of the instrument panel reinforcement 14 (a nut placing step).

Subsequently, as illustrated in FIG. 5, the upper bracket 22 and the lower bracket 24 are gripped by a jig 110 and the second gap 104 is set between the bottom face of the rear attachment portion 22C of the upper bracket 22 and the top face of the rear extension portion 24C of the lower bracket 24, on the rear side of the instrument panel reinforcement 14. At this time, the second gap 104 between the bottom face of the rear attachment portion 22C of the upper bracket 22 and the top face of the rear extension portion 24C of the lower bracket 24 is fixed constant by the jig 110 (a second-gap fixing step). Hereby, a gap deviation due to a component variation and the like is set on a side of the first gap 102 between the bottom face of the front attachment portion 22B of the upper bracket 22 and the top face of the attachment portion 40 of the lower bracket 24, on the front side of the instrument panel reinforcement 14. After that, as will be described later, the bolts 44 on the front side of the instrument panel reinforcement 14 and the bolts 66 on the rear side of the instrument panel reinforcement 14 are fastened in this order (see FIG. 2). Note that FIG. 5 illustrates only a part of the upper bracket 22 and the lower bracket 24 around the instrument panel reinforcement 14 and does not illustrate members around the upper bracket 22 and the lower bracket 24.

Then, as illustrated in FIG. 6, the bolts 44 on the front side of the instrument panel reinforcement 14 are fastened. The shaft portion 44B of the bolt 44 is inserted into the bolt through-hole 30 from the upper side of the front attachment portion 22B of the upper bracket 22, the shaft portion 44B of the bolt 44 is threadedly engaged to the internal screw thread portion 47A of the nut 46, and the shaft portion 44B of the bolt 44 is fastened to the internal screw thread portion 50A of the hole portion 50. At this time, the external screw thread portion of the shaft portion 44B of the bolt 44 is not fastened and fixed to the internal screw thread portion 47A of the nut 46, but is threadedly engaged thereto to such an extent that a resistance occurs. Further, the external screw thread portion 47B as the reverse screw relative to the shaft portion 44B of the bolt 44 is formed on the outer periphery of the small-diameter portion 46B of the nut 46 and the external screw thread portion 47B of the nut 46 is threadedly engaged to the internal screw thread portion 48A of the insertion hole 48.

On this account, when the bolt 44 rotates clockwise and the bolt 44 moves downward (the arrow-A direction), for example, the nut 46 rotates and moves upward (toward the front attachment portion 22B of the upper bracket 22 as indicated by the arrow B) along with the movement of the bolt 44. Then, the top face of the large-diameter portion 46A of the nut 46 makes contact with the bottom face of the front attachment portion 22B of the upper bracket 22, and a height of the nut 46 relative to the top face of the attachment portion 40 is adjusted. Hereby, the nut 46 buries the first gap 102 between the bottom face of the front attachment portion 22B of the upper bracket 22 and the top face of the attachment portion 40 of the lower bracket 24. That is, due to the nut 46, a height of a fastening position of the upper bracket 22 relative to the lower bracket 24 is adjusted. Further, when the bolt 44 is rotated clockwise, the head 44A of the bolt 44 makes contact with the front attachment portion 22B of the upper bracket 22 via the washer and the external screw thread portion of the shaft portion 44B of the bolt 44 is fastened to the internal screw thread portion 50A of the hole portion 50. Hereby, the front attachment portion 22B of the upper bracket 22 and the front extension portion 24B of the lower bracket 24 are fastened and fixed to each other with the front fastening portions 36 including the bolts 44 and the like (a first fastening step).

The first gap 102 between the front attachment portion 22B of the upper bracket 22 and the attachment portion 40 of the lower bracket 24 varies depending on a component variation and the like, but the nut 46 buries the first gap 102. Hereby, no assembling distortion occurs between the front attachment portion 22B of the upper bracket 22 and the front extension portion 24B of the lower bracket 24, due to fastening with the bolt 44. At this time, the second gap 104 between the rear attachment portion 22C of the upper bracket 22 and the rear extension portion 24C of the lower bracket 24 becomes constant all the time (see FIG. 5).

Then, as illustrated in FIG. 7, the bolt 66 on the rear side of the instrument panel reinforcement 14 is fastened in an arrow-C direction. More specifically, the shaft portion 66B of the bolt 66 is inserted into the bolt through-hole 30 from the upper side of the rear attachment portion 22C of the upper bracket 22, and the external screw thread portion 67 of the bolt 66 is fastened to the internal screw thread portion 73 of the hole portion 72 of the lower bracket 24 so that the head 66A of the bolt 66 makes contact with the rear attachment portion 22C of the upper bracket 22 via the washer. At this time, the rear attachment portion 22C of the upper bracket 22 and the rear extension portion 24C of the lower bracket 24 deform, so that the rear attachment portion 22C of the upper bracket 22 and the rear extension portion 24C of the lower bracket 24 are fastened and fixed to each other with the bolt 66 and the like (a second fastening step). Hereby, the steering support structure 12 is formed, so that the steering column 16 is supported by the instrument panel reinforcement 14 via the steering support bracket 20.

In the steering support structure 12, the second gap 104 between the rear attachment portion 22C of the upper bracket 22 and the rear extension portion 24C of the lower bracket 24 is constant all the time as illustrated in FIG. 5, so that assembling distortion between the rear attachment portion 22C of the upper bracket 22 and the rear extension portion 24C of the lower bracket 24 at the time when the bolt 66 is fastened to the second gap 104 also becomes constant. Further, since the second gap 104 is set and the bolt 66 is fastened, the upper bracket 22 and the lower bracket 24 are pressed against the instrument panel reinforcement 14 so as to be attached thereto by pressure, thereby improving bonding stiffness. Further, by changing the size of the second gap 104, it is possible to increase/decrease the bonding stiffness and the assembling distortion. For example, by removing the second gap 104 (by setting the second gap 104 to generally zero), it is possible to largely reduce the assembling distortion.

In the steering support structure 12, by adjusting the height of the nut 46, it is possible to adjust the first gap 102 between the upper bracket 22 and the lower bracket 24 in the front fastening portion 36. Hereby, the variation of the first gap 102 between the upper bracket 22 and the lower bracket 24, caused due to a component variation, can be set generally constant, thereby making it possible to reduce the assembling distortion at the time when the upper bracket 22 and the lower bracket 24 are fastened to each other with the bolt 44.

Further, in the steering support structure 12, in a state where the bolt 44 is inserted into the upper bracket 22 and penetrates therethrough without being fastened and fixed to the nut 46, the bolt 44 is fastened and fixed to the lower bracket 24. The nut 46 includes the external screw thread portion 47B formed on the outer periphery as the reverse screw relative to the bolt 44, and the lower bracket 24 includes the internal screw thread portion 48A provided as the reverse screw and configured such that the external screw thread portion 47B of the nut 46 is threadedly engaged thereto. Hereby, along with the operation to fasten and fix (threadedly engage) the bolt 44 to the lower bracket 24, the nut 46 moves toward the upper bracket 22. Hereby, along with the operation to fasten and fix (threadedly engage) the bolt 44 to the lower bracket 24, the first gap 102 between the upper bracket 22 and the lower bracket 24 can be adjusted by the nut 46, thereby improving working efficiency.

Further, in the steering support method, the first gap 102 between the upper bracket 22 and the lower bracket 24 can be adjusted by the nut 46 on the front side of the instrument panel reinforcement 14, and the upper bracket 22 and the lower bracket 24 are fastened to each other with the bolt 44 via the nut 46. Then, the upper bracket 22 and the lower bracket 24 are fastened to each other with the bolt 66 on the rear side of the instrument panel reinforcement 14. This makes it possible to reduce the assembling distortion at the time when the upper bracket 22 and the lower bracket 24 are fastened to each other with the bolts 44, 66.

Further, the steering support method includes, before the first fastening step, the second-gap fixing step of fixing the second gap 104 between the upper bracket 22 and the lower bracket 24 by the jig 110 on the rear side of the instrument panel reinforcement 14. Hereby, the upper bracket 22 and the lower bracket 24 can be fastened and fixed to each other in a state where the second gap 104 between the upper bracket 22 and the lower bracket 24 is set generally constant by the jig 110. Hereby, the assembling distortion at the time when the upper bracket 22 and the lower bracket 24 are fastened to each other with the bolts 44, 66 can fall within an allowable range, thereby making it possible to improve reliability.

### [Second Embodiment]

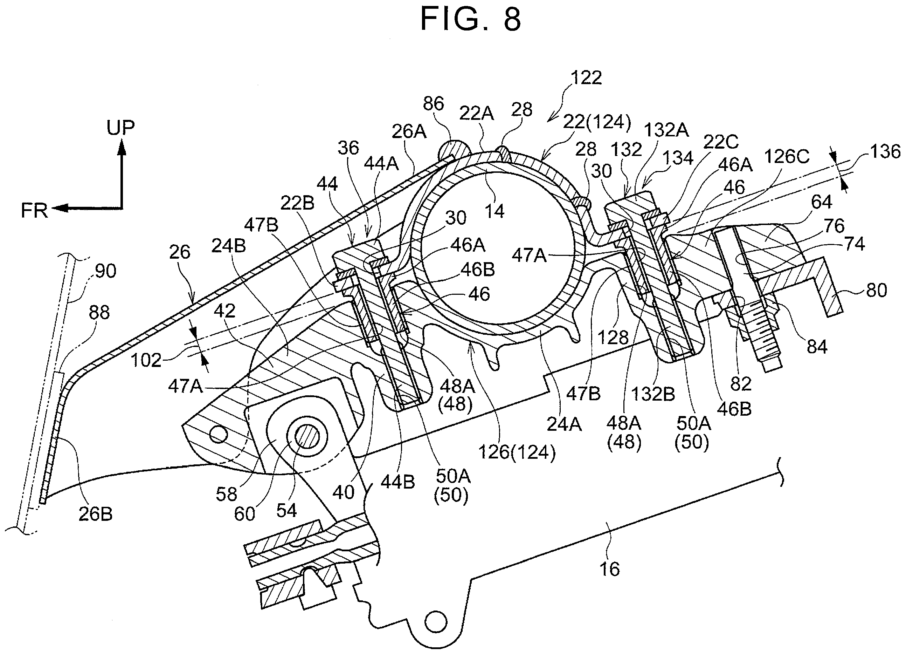

FIG. 8 illustrates a steering support structure 122 of the second embodiment. Note that the same constituent as in the first embodiment has the same reference sign as in the first embodiment, and a description thereof is omitted.

As illustrated in FIG. 8, the steering support structure 122 includes a steering support bracket 124 attached to an instrument panel reinforcement 14 and configured to support a steering column 16. The steering support bracket 124 includes an upper bracket 22, and a lower bracket 126 placed on a bottom side of the instrument panel reinforcement 14.

A rear extension portion 126C of a lower bracket 126 includes an attachment portion 128 placed at a position overlapping with a rear attachment portion 22C of the upper bracket 22, and a column attachment portion 64 placed on a rear side relative to the attachment portion 128. The attachment portion 128 has an upper insertion hole 48 to which a nut 46 for adjusting a gap with respect to the rear attachment portion 22C is attached, and a hole portion 50 communicating with the insertion hole 48 on a lower side of the insertion hole 48. A bolt 132 as a second fastener includes a head 132A and a shaft portion 132B where an external screw thread portion is formed. The bolt 132 is configured similarly to the bolt 44 as the first fastener. The rear attachment portion 22C of the upper bracket 22 and the rear extension portion 126C of the lower bracket 126 are fastened and fixed to each other with a rear fastening portion 134 including the bolt 132.

The lower bracket 126 is constituted by an injection-molded product, for example. The lower bracket 126 is constituted by metal (aluminum, magnesium, iron, and the like), resin, or a composite of metal and resin, for example. In the present embodiment, the lower bracket 126 is a die-casting product of aluminum.

In the steering support structure 122, in a state where the shaft portion 132B of the bolt 132 is inserted into the bolt through-hole 30 from an upper side of the rear attachment portion 22C of the upper bracket 22 and the shaft portion 132B of the bolt 132 penetrates therethrough without being fastened and fixed to the nut 46, the external screw thread portion of the shaft portion 132B of the bolt 132 is fastened to an internal screw thread portion 50A of a hole portion 50. Hereby, the rear attachment portion 22C of the upper bracket 22 and the rear extension portion 126C of the lower bracket 126 are fastened and fixed to each other. At this time, when the bolt 132 rotates clockwise and the bolt 132 moves downward, for example, the nut 46 rotates and moves upward (toward the rear attachment portion 22C of the upper bracket 22) along with the movement of the bolt 132. When a top face of a large-diameter portion 46A of the nut 46 makes contact with a bottom face of the rear attachment portion 22C of the upper bracket 22, the nut 46 buries a second gap 136 between the bottom face of the rear attachment portion 22C of the upper bracket 22 and the top face of the attachment portion 128 the lower bracket 126. Further, when the bolt 132 is rotated clockwise, the head 132A of the bolt 132 makes contact with the rear attachment portion 22C of the upper bracket 22 via a washer and the external screw thread portion of the shaft portion 132B of the bolt 132 is fastened to the internal screw thread portion 50A of the hole portion 50.

Here, the following describes a steering support method for assembling the steering support structure 122. First, in a nut placing step, the nuts 46 are placed between the upper bracket 22 placed on the top side of the instrument panel reinforcement 14 and the lower bracket 126 placed on the bottom side of the instrument panel reinforcement 14, on the front side and the rear side of the instrument panel reinforcement 14. Further, in a first fastening step, a height of the nut 46 with respect to the top face of the attachment portion 40 is adjusted on the front side of the instrument panel reinforcement 14, so as to adjust a first gap 102 between the upper bracket 22 and the lower bracket 126, and the upper bracket 22 and the lower bracket 126 are fastened to each other with a bolt 44 via the nut 46. Further, in a second fastening step, the upper bracket 22 and the lower bracket 126 are fastened to each other with the bolt 132 via the nut 46 on the rear side of the instrument panel reinforcement 14. In the steering support method, the upper bracket 22 and the lower bracket 126 can be fastened in a state where the first gap 102 and the second gap 136 between the upper bracket 22 and the lower bracket 126 on the front side and the rear side of the instrument panel reinforcement 14 are buried by the nuts 46. This makes it possible to largely reduce assembling distortion at the time when the upper bracket 22 and the lower bracket 126 are fastened to each other with the bolts 44, 132.

Further, in the steering support structure 122, the nuts 46 are provided both in front fastening portions 36 and the rear fastening portions 134. Hereby, the first gap 102 and the second gap 136 between the upper bracket 22 and the lower bracket 126 can be buried by the nuts 46 both in the front fastening portions 36 and the rear fastening portions 134. Hereby, it is possible to eliminate gaps between the upper bracket 22 and the lower bracket 126 by both the front fastening portions 36 and the rear fastening portions 134, thereby making it possible to largely reduce the assembling distortion.

Note that, in the first embodiment, the upper bracket 22 and the lower bracket 24 are fastened with the bolts 44 via the nuts 46 on the front side of the instrument panel reinforcement 14, and the upper bracket 22 and the lower bracket 24 are fastened with the bolts 66 without the nut on the rear side of the instrument panel reinforcement 14, but, the present invention is not limited to this configuration. For example, the upper bracket 22 and the lower bracket 24 may be fastened with bolts via nuts on the rear side of the instrument panel reinforcement 14, and the upper bracket 22 and the lower bracket 24 may be fastened with bolts without nuts on the front side of the instrument panel reinforcement 14.

Further, in the first and second embodiments, the shapes of the upper bracket 22 and the lower bracket 24, 126 are modifiable. Further, in the first and second embodiments, the nut 46 is provided in the lower bracket 24, 126, a bolt is inserted from the upper bracket 22 side, and the bolt is fastened and fixed to the lower bracket 24, 126 via the nut 46. However, the present invention is not limited to this configuration. For example, a nut may be attached to an upper bracket, a bolt may be inserted from a lower bracket side, and the bolt may be fastened and fixed to the upper bracket via the nut.

Further, in the first and second embodiments, the configuration to support

Further, in the first and second embodiments, the lower bracket 24, 126 is a die-casting product and the upper bracket 22 is constituted by a press material or an extruded material, but the present invention is not limited to this configuration. For example, the upper bracket may be an injection molded product, and the lower bracket may be constituted by a press material or an extruded material.

Further, in the first and second embodiments, the upper bracket 22 is joined to the top side of the instrument panel reinforcement 14 by welding and the lower bracket 24, 126 is placed on the bottom side of the instrument panel reinforcement 14 without being joined thereto, but the present invention is not limited to this configuration. For example, the upper bracket may be joined to the top side of the instrument panel reinforcement 14 by fastening and fixing. Further, for example, the lower bracket 24, 126 may be joined to the bottom side of the instrument panel reinforcement 14 by welding or by fastening and fixing, and the upper bracket 22 may be placed on the top side of the instrument panel reinforcement 14 without being joined thereto. Furthermore, the lower bracket 24, 126 may be joined to the bottom side of the instrument panel reinforcement 14 by welding or fastening and the upper bracket 22 may be joined to the top side of the instrument panel reinforcement 14 by welding or fastening.

Further, in the second embodiment, the lower bracket 126 is a die-casting product, but the present invention is not limited to this configuration. For example, the lower bracket may be constituted by a press material or an extruded material.

Note that specific embodiments of the present invention have been described above, but the present invention is not limited to those embodiments, and it is obvious to those skilled in the art that the embodiments are variously modifiable within the scope of the invention, as defined in the appended claims.

## Claims

1. A steering support structure (12) comprising:
an instrument panel reinforcement (14) extending in a vehicle width direction;
a steering support bracket (20) attached to the instrument panel reinforcement (14) and supports a steering column (16), the steering support bracket (20) including an upper bracket (22) placed on an upper side of the instrument panel reinforcement (14) in a vehicle up-down direction, and a lower bracket (24) placed on a lower side of the instrument panel reinforcement (14) in the vehicle up-down direction,
a front fastening portion (36) fastening the upper bracket (22) and the lower bracket (24) to each other on a front side of the instrument panel reinforcement (14) in a vehicle front-rear direction;
a rear fastening portion (38) fastening the upper bracket (22) and the lower bracket (24) to each other on a rear side of the instrument panel reinforcement (14) in the vehicle front-rear direction;
charactertised in that at least one of the upper bracket (22) and the lower bracket (24) are joined to the instrument panel reinforcement (14); and
the steering support structure further comprises
a nut (46) provided between the upper bracket (22) and the lower bracket (24) in at least one of the front fastening portion (36) and the rear fastening portion (38), the nut (46) being configured to adjust a height of a fastening position of the upper bracket (22) relative to the lower bracket (24).

2. The steering support structure (12) according to claim 1, wherein
the nut (46) is provided at both of the front fastening portion (36) and the rear fastening portion (38).

3. The steering support structure (12) according to claim 1 or 2, wherein:
in a state where a bolt (44) is inserted into either one of the upper bracket (22) and the lower bracket (24) and penetrates through the either one of the upper bracket (22) and the lower bracket (24) without being fastened and fixed to the nut (46), the bolt (44) is fastened to the other one of the upper bracket (22) and the lower bracket (24);
the nut (46) includes an external screw thread portion (47B) provided on an outer periphery of the nut (46), the external screw thread portion (47B) is provided as a reverse screw relative to the bolt (44);
the other one of the upper bracket (22) and the lower bracket (24) includes an internal screw thread portion (48A) provided as a reverse screw such that the external screw thread portion (47B) is threadedly engaged to the internal screw thread portion (48A); and
the nut (46) is configured to adjust a gap between the upper bracket (22) and the lower bracket (24) by moving toward the either one of the upper bracket (22) and the lower bracket (24) along with the bolt being screwed into the other one of the upper bracket (22) and the lower bracket (24).

4. A steering support method for supporting a steering column (16), via a steering support bracket (20), by an instrument panel reinforcement (14) extending in a vehicle width direction, the steering support method comprising:
(a) placing a nut (46) between an upper bracket (22) and a lower bracket (24) on either one of a front side and a rear side of the instrument panel reinforcement (14) in a vehicle front-rear direction, the upper bracket (22) being a part of the steering support bracket (20) and placed on an upper side of the instrument panel reinforcement (14) in a vehicle up-down direction, the lower bracket (24) being a part of the steering support bracket (20) and placed on a lower side of the instrument panel reinforcement (14) in the vehicle up-down direction, the nut (46) being configured to adjust a height of a fastening position of the upper bracket (22) relative to the lower bracket (24);
(b) adjusting a first gap between the upper bracket (22) and the lower bracket (24) by adjusting a height of the nut (46) on the either one of the front side and the rear side of the instrument panel reinforcement (14) in the vehicle front-rear direction, and fastening the upper bracket (22) and the lower bracket (24) with a first fastener (44) via the nut (46); and
(c) fastening the upper bracket (22) and the lower bracket (24) with a second fastener (66) without the nut (46) on the other one of the front side and the rear side of the instrument panel reinforcement (14).

5. The steering support method according to claim 4, further comprising:
(d) before the step of (b), fixing a second gap between the upper bracket (22) and the lower bracket (24) with a jig on the other one of the front side and the rear side of the instrument panel reinforcement (14) in the vehicle front-rear direction.

6. A steering support method for supporting a steering column (16), via a steering support bracket (20), by an instrument panel reinforcement (14) extending in a vehicle width direction, the steering support method comprising:
(a) placing two nuts (46), the two nuts (46) being placed between an upper bracket (22) and a lower bracket (24) on a front side and a rear side of the instrument panel reinforcement (14) in a vehicle front-rear direction, respectively, the upper bracket (22) being constituting a part of the steering support bracket (20) and placed on an upper side of the instrument panel reinforcement (14) in a vehicle up-down direction, the lower bracket (24) being constituting a part of the steering support bracket (20) and placed on a lower side of the instrument panel reinforcement (14) in the vehicle up-down direction, the nuts (46) being configured to adjust a height of a fastening position of the upper bracket (22) relative to the lower bracket (24);
(b) adjusting a gap between the upper bracket (22) and the lower bracket (24) by adjusting a height of either one of the nuts (46) placed on either one of the front side and the rear side of the instrument panel reinforcement (14) in the vehicle front-rear direction, and fastening the upper bracket (22) and the lower bracket (24) with a first fastener (44) via the nut (46); and
(c) fastening the upper bracket (22) and the lower bracket (24) with a second fastener (132) via the other one of the nuts (46) on the other one of the front side and the rear side of the instrument panel reinforcement (14).

## Patentansprüche

1. Lenkunterstützungsstruktur (12), umfassend:
eine Armaturenbrettverstärkung (14), die sich in eine Fahrzeugbreitenrichtung erstreckt;
eine Lenkunterstützungshalterung (20), die an der Armaturenbrettverstärkung (14) angebracht ist und eine Lenksäule (16) unterstützt, wobei die Lenkunterstützungshalterung (20) eine obere Halterung (22), die auf einer Oberseite der Lenkunterstützungsverstärkung (14) in einer Fahrzeug-Aufwärts-Abwärts-Richtung angeordnet ist, und eine untere Halterung (24), die auf einer Unterseite der Armaturenbrettverstärkung (14) in der Fahrzeug-Aufwärts-Abwärts-Richtung angeordnet ist, umfasst,
einen vorderen Befestigungsabschnitt (36), der die obere Halterung (22) und die untere Halterung (24) auf einer Vorderseite der Armaturenbrettverstärkung (14) in einer Fahrzeug-Vorne-Hinten-Richtung aneinander befestigt;
einen hinteren Befestigungsabschnitt (38), der die obere Halterung (22) und die untere Halterung (24) auf einer Hinterseite der Armaturenbrettverstärkung (14) in der Fahrzeug-Vorne-Hinten-Richtung aneinander befestigt;
**dadurch gekennzeichnet, dass** mindestens eine aus der oberen Halterung (22) und der unteren Halterung (24) mit der Armaturenbrettverstärkung (14) verbunden ist; und
die Lenkunterstützungsstruktur ferner Folgendes umfasst:
eine Mutter (46), die zwischen der oberen Halterung (22) und der unteren Halterung (24) in mindestens einem aus dem vorderen Befestigungsabschnitt (36) und dem hinteren Befestigungsabschnitt (38) bereitgestellt ist, wobei die Mutter (46) konfiguriert ist, eine Höhe einer Befestigungsposition der oberen Halterung (22) in Bezug auf die untere Halterung (24) anzupassen.

2. Lenkunterstützungsstruktur (12) nach Anspruch 1, wobei
die Mutter (46) sowohl am vorderen Befestigungsabschnitt (36) als auch am hinteren Befestigungsabschnitt (38) bereitgestellt ist.

3. Lenkunterstützungsstruktur (12) nach Anspruch 1 oder 2, wobei:
in einem Zustand, in dem ein Bolzen (44) in eine aus der oberen Halterung (22) und der unteren Halterung (24) eingeführt ist und durch die eine aus der oberen Halterung (22) und der unteren Halterung (24) dringt, ohne an der Mutter (46) befestigt oder daran fixiert zu sein, der Bolzen (44) an einer aus der oberen Halterung (22) und der unteren Halterung (24) befestigt ist;
die Mutter (46) einen äußeren Schraubengewindeabschnitt (47B) umfasst, der auf einem Außenumfang der Mutter (46) bereitgestellt ist, wobei der äußere Schraubengewindeabschnitt (47B) als gegenläufige Schraube in Bezug auf den Bolzen (44) bereitgestellt ist;
die andere aus der oberen Halterung (22) und der unteren Halterung (24) einen inneren Schraubengewindeabschnitt (48A) umfasst, der als gegenläufige Schraube bereitgestellt ist, sodass der äußere Schraubengewindeabschnitt (47B) über ein Gewinde mit dem inneren Schraubengewindeabschnitt (48A) in Eingriff steht; und
die Mutter (46) konfiguriert ist, eine Lücke zwischen der oberen Halterung (22) und der unteren Halterung (24) durch Bewegen in Richtung der einen aus der oberen Halterung (22) und der unteren Halterung (24) zusammen mit dem Bolzen, der in die andere aus der oberen Halterung (22) und der unteren Halterung (24) geschraubt ist, anzupassen.

4. Lenkunterstützungsverfahren zum Unterstützen einer Lenksäule (16) über eine Lenkunterstützungshalterung (20) durch eine Armaturenbrettverstärkung (14), sie sich in eine Fahrzeugbreitenrichtung erstreckt, wobei das Lenkunterstützungsverfahren Folgendes umfasst:
(a) Anordnen einer Mutter (46) zwischen einer oberen Halterung (22) und einer unteren Halterung (24) auf einer aus einer Vorderseite und einer Hinterseite einer Armaturenbrettverstärkung (14) in eine Fahrzeug-Vorne-Hinten-Richtung, wobei die obere Halterung (22) ein Teil der Lenkunterstützungshalterung (20) ist und auf einer Oberseite der Armaturenbrettverstärkung (14) in eine Fahrzeug-Aufwärts-Abwärts-Richtung angeordnet ist, wobei die untere Halterung (24) ein Teil der Lenkunterstützungshalterung (20) ist und auf einer Unterseite der Armaturenbrettverstärkung (14) in die Fahrzeug-Aufwärts-Abwärts-Richtung angeordnet ist, wobei die Mutter (46) konfiguriert ist, eine Höhe einer Befestigungsposition der oberen Halterung (22) in Bezug auf die untere Halterung (24) anzupassen;
(b) Anpassen einer ersten Lücke zwischen der oberen Halterung (22) und der unteren Halterung (24) durch Anpassen einer Höhe der Mutter (46) auf der einen aus der Vorderseite und der Hinterseite der Armaturenbrettverstärkung (14) in die Fahrzeug-Vorne-Hinten-Richtung und Befestigen der oberen Halterung (22) und der unteren Halterung (24) mit einem ersten Befestigungselement (44) über die Mutter (46); und
(c) Befestigen der oberen Halterung (22) und der unteren Halterung (24) mit einem zweiten Befestigungselement (66) ohne die Mutter (46) auf der anderen aus der Vorderseite und der Hinterseite der Armaturenbrettverstärkung (14).

5. Lenkunterstützungsverfahren nach Anspruch 4, ferner umfassend:
(d) vor dem Schritt von (b) Fixieren einer zweiten Lücke zwischen der oberen Halterung (22) und der unteren Halterung (24) mit einer Spannvorrichtung auf der anderen aus der Vorderseite und der Hinterseite der Armaturenbrettverstärkung (14) in die Fahrzeug-Vorne-Hinten-Richtung.

6. Lenkunterstützungsverfahren zum Unterstützen einer Lenksäule (16) über eine Lenkunterstützungshalterung (20) durch eine Armaturenbrettverstärkung (14), die sich in eine Fahrzeugbreitenrichtung erstreckt, wobei das Lenkunterstützungsverfahren Folgendes umfasst:
(a) Anordnen von zwei Muttern (46), wobei die zwei Muttern (46) zwischen einer oberen Halterung (22) und einer unteren Halterung (24) jeweils auf einer Vorderseite und einer Hinterseite einer Armaturenbrettverstärkung (14) in eine Fahrzeug-Vorne-Hinten-Richtung angeordnet sind, wobei die obere Halterung (22) einen Teil der Lenkunterstützungshalterung (20) bildet und auf einer Oberseite der Armaturenbrettverstärkung (14) in eine Fahrzeug-Aufwärts-Abwärts-Richtung angeordnet ist, wobei die untere Halterung (24) einen Teil der Lenkunterstützungshalterung (20) bildet und auf einer Unterseite der Armaturenbrettverstärkung (14) in die Fahrzeug-Aufwärts-Abwärts-Richtung angeordnet ist, wobei die Muttern (46) konfiguriert sind, eine Höhe einer Befestigungsposition der oberen Halterung (22) in Bezug auf die untere Halterung (24) anzupassen;
(b) Anpassen einer Lücke zwischen der oberen Halterung (22) und der unteren Halterung (24) durch Anpassen einer Höhe von einer der Muttern (46), die auf einer aus der Vorderseite und der Hinterseite der Armaturenbrettverstärkung (14) in die Fahrzeug-Vorne-Hinten-Richtung angeordnet sind, und Befestigen der oberen Halterung (22) und der unteren Halterung (24) mit einem ersten Befestigungselement (44) über die Mutter (46); und
(c) Befestigen der oberen Halterung (22) und der unteren Halterung (24) mit einem zweiten Befestigungselement (132) über die andere der Muttern (46) auf der anderen aus der Vorderseite und der Hinterseite der Armaturenbrettverstärkung (14).

## Revendications

1. Structure de support de direction (12), comprenant :
un renfort de tableau de bord (14) s'étendant dans une direction de largeur de véhicule ;
un appui de support de direction (20) attaché au renfort de tableau de bord (14) et supportant une colonne de direction (16), l'appui de support de direction (20) incluant un appui supérieur (22) placé sur un côté supérieur du renfort de tableau de bord (14) dans une direction verticale de véhicule, et un appui inférieur (24) placé sur un côté inférieur du renfort de tableau de bord (14) dans la direction verticale de véhicule,
une portion de fixation avant (36) fixant l'appui supérieur (22) et l'appui inférieur (24) l'un à l'autre sur un côté avant du renfort de tableau de bord (14) dans une direction longitudinale de véhicule ;
une portion de fixation arrière (38) fixant l'appui supérieur (22) et l'appui inférieur (24) l'un à l'autre sur un côté arrière du renfort de tableau de bord (14) dans la direction longitudinale de véhicule ;
**caractérisée en ce qu'**au moins un de l'appui supérieur (22) et de l'appui inférieur (24) est joint au renfort de tableau de bord (14) ; et
la structure de support de direction comprend en outre
un écrou (46) prévu entre l'appui supérieur (22) et l'appui inférieur (24) dans au moins une de la portion de fixation avant (36) et de la portion de fixation arrière (38), l'écrou (46) étant configuré pour ajuster une hauteur d'une position de fixation de l'appui supérieur (22) par rapport à l'appui inférieur (24).

2. Structure de support de direction (12) selon la revendication 1, dans laquelle
l'écrou (46) est prévu sur les deux de la portion de fixation avant (36) et de la portion de fixation arrière (38).

3. Structure de support de direction (12) selon la revendication 1 ou 2, dans laquelle :
dans un état où un boulon (44) est inséré dans l'un ou l'autre de l'appui supérieur (22) et de l'appui inférieur (24) et pénètre à travers l'un ou l'autre de l'appui supérieur (22) et de l'appui inférieur (24) sans être fixé et assujetti à l'écrou (46), le boulon (44) est fixé à l'autre de l'appui supérieur (22) et de l'appui inférieur (24) ;
l'écrou (46) inclut une portion de filet de vis externe (47B) prévue sur une périphérie extérieure de l'écrou (46), la portion de filet de vis externe (47B) est prévue sous forme de vis inverse par rapport au boulon (44) ;
l'autre de l'appui supérieur (22) et de l'appui inférieur (24) inclut une portion de filet de vis interne (48A) prévue sous forme de vis inverse de telle sorte que la portion de filet de vis externe (47B) soit mise en prise filetée avec la portion de filet de vis interne (48A) ; et
l'écrou (46) est configuré pour ajuster un espace entre l'appui supérieur (22) et l'appui inférieur (24) en se déplaçant vers l'un ou l'autre de l'appui supérieur (22) et de l'appui inférieur (24) conjointement avec le boulon étant vissé dans l'autre de l'appui supérieur (22) et de l'appui inférieur (24).

4. Procédé de support de direction pour supporter une colonne de direction (16), par l'intermédiaire d'un appui de support de direction (20), en utilisant un renfort de tableau de bord (14) s'étendant dans une direction de largeur de véhicule, le procédé de support de direction comprenant :
(a) le placement d'un écrou (46) entre un appui supérieur (22) et un appui inférieur (24) sur l'un ou l'autre d'un côté avant et d'un côté arrière du renfort de tableau de bord (14) dans une direction longitudinale de véhicule, l'appui supérieur (22) étant une partie de l'appui de support de direction (20) et placé sur un côté supérieur du renfort de tableau de bord (14) dans une direction verticale de véhicule, l'appui inférieur (24) étant une partie de l'appui de support de direction (20) et placé sur un côté inférieur du renfort de tableau de bord (14) dans la direction verticale de véhicule, l'écrou (46) étant configuré pour ajuster une hauteur d'une position de fixation de l'appui supérieur (22) par rapport à l'appui inférieur (24) ;
(b) l'ajustement d'un premier espace entre l'appui supérieur (22) et l'appui inférieur (24) en ajustant une hauteur de l'écrou (46) sur l'un ou l'autre du côté avant et du côté arrière du renfort de tableau de bord (14) dans la direction longitudinale de véhicule, et la fixation de l'appui supérieur (22) et de l'appui inférieur (24) avec un premier élément de fixation (44) par l'intermédiaire de l'écrou (46) ; et
(c) la fixation de l'appui supérieur (22) et de l'appui inférieur (24) avec un second élément de fixation (66) sans l'écrou (46) sur l'autre du côté avant et du côté arrière du renfort de tableau de bord (14).

5. Procédé de support de direction selon la revendication 4, comprenant en outre :
(d) avant l'étape (b), l'établissement d'un second espace entre l'appui supérieur (22) et l'appui inférieur (24) avec un dispositif de montage sur l'autre du côté avant et du côté arrière du renfort de tableau de bord (14) dans la direction longitudinale de véhicule.

6. Procédé de support de direction pour supporter une colonne de direction (16), par l'intermédiaire d'un appui de support de direction (20), en utilisant un renfort de tableau de bord (14) s'étendant dans une direction de largeur de véhicule, le procédé de support de direction comprenant :
(a) le placement de deux écrous (46), les deux écrous (46) étant placés entre un appui supérieur (22) et un appui inférieur (24) sur un côté avant et un côté arrière du renfort de tableau de bord (14) dans une direction longitudinale de véhicule, respectivement, l'appui supérieur (22) constituant une partie de l'appui de support de direction (20) et étant placé sur un côté supérieur du renfort de tableau de bord (14) dans une direction verticale de véhicule, l'appui inférieur (24) constituant une partie de l'appui de support de direction (20) et étant placé sur un côté inférieur du renfort de tableau de bord (14) dans la direction verticale de véhicule, les écrous (46) étant configurés pour ajuster une hauteur d'une position de fixation de l'appui supérieur (22) par rapport à l'appui inférieur (24) ;
(b) l'ajustement d'un espace entre l'appui supérieur (22) et l'appui inférieur (24) en ajustant une hauteur de l'un ou de l'autre des écrous (46) placés sur l'un ou l'autre du côté avant et du côté arrière du renfort de tableau de bord (14) dans la direction longitudinale de véhicule, et la fixation de l'appui supérieur (22) et de l'appui inférieur (24) avec un premier élément de fixation (44) par l'intermédiaire de l'écrou (46) ; et
(c) la fixation de l'appui supérieur (22) et de l'appui inférieur (24) avec un second élément de fixation (132) par l'intermédiaire de l'autre des écrous (46) sur l'autre du côté avant et du côté arrière du renfort de tableau de bord (14).
